# EUROPEAN PATENT SPECIFICATION

(11) **EP 3 158 828 B1**
(45) Date of publication and mention of the grant of the patent: **09.09.2020**
(21) Application number: 14895028.0
(22) Date of filing: 17.06.2014
(51) Int. Cl.: H04W 92/20, H04W 36/00

(54) **RADIO NETWORK NODES AND METHODS FOR UPDATING EXTERNAL CELL INFORMATION**
FUNKNETZKNOTEN UND VERFAHREN ZUR AKTUALISIERUNG VON EXTERNEN ZELLINFORMATIONEN
NOEUDS DE RÉSEAU RADIO ET PROCÉDÉS POUR METTRE À JOUR DES INFORMATIONS DE CELLULE EXTERNE

(43) Date of publication of application: 26.04.2017
(73) Proprietor: Telefonaktiebolaget LM Ericsson (publ), 164 83 Stockholm (SE)
(72) Inventor: ENGSTRÖM, Stefan, 58332 Linköping (SE); AHLSTRÖM, Tobias, 59072 Ljungsbro (SE)
(74) Representative: Zacco Sweden AB
(86) International application number: PCT/SE2014/050747
(87) International publication number: WO 2015/195005

(56) References cited:
- EP-A2- 2 405 682
- EP-B1- 2 584 837
- WO-A1-2011/145988
- WO-A1-2011/162654
- 3gpp: "3rd Generation Partnership Project; Technical Specification Group Radio Access Network; Evolved Universal Terrestrial Radio Access Network (E-UTRAN); X2 application protocol (X2AP) (Release 12)", , 1 March 2014 (2014-03-01), XP055247226, Retrieved from the Internet: URL:http://www.3gpp.org/ftp/Specs/zItuInfo /M.2012-2/2014-12/Rel-11/32_series/ [retrieved on 2016-02-04]
- 'Technical Specification Group Radio Access Network; Evolved Universal Terrestrial Radio Access Network (E-UTRAN); X2 application protocol (X2 AP ) (Release 12' 3GPP TS 36.423 V12.1.0 March 2014, XP055247226

## Description

### TECHNICAL FIELD

Embodiments herein relate to radio network nodes and to methods in the radio network nodes. In particular, embodiments relate to updating external cell information.

### BACKGROUND

Communication devices such as wireless devices are also known as e.g. user equipments (UE), mobile terminals, wireless terminals, and/or mobile stations. Wireless devices are enabled to communicate wirelessly in a cellular communications network or wireless communication system, sometimes also referred to as a cellular radio system or cellular networks. The communication may be performed e.g. between two wireless devices, between a wireless device and a regular telephone and/or between a wireless device and a server via a Radio Access Network (RAN) and possibly one or more core networks, comprised within the cellular communications network.

Wireless devices may further be referred to as mobile telephones, cellular telephones, laptops, tablet computers or surf plates with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another wireless device or a server.

The wireless communications network covers a geographical area which is divided into cell areas, wherein each cell area being served by a radio network node. A cell is the geographical area where radio coverage is provided by the radio network node.

The radio network node may e.g. be a base station such as a Radio Base Station (RBS), eNB, eNodeB, NodeB, B node, or Base Transceiver Station (BTS), depending on the technology and terminology used. The base stations may be of different classes such as e.g. macro eNodeB, home eNodeB or pico base station, based on transmission power and thereby also cell size.

Further, each radio network node may support one or several communication technologies. The radio network nodes communicate over the air interface operating on radio frequencies with the wireless terminals within range of the radio network node. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or even eNBs, may be directly connected to one or more core networks.

Radio network nodes may exchange information between one another. The information may e.g. concern cells served by the radio network nodes. In LTE, eNBs exchange information via an interface referred to as the X2 interface, as described in 3GPP Technical Specification (TS) 36.423, Version 12.1.0. In addition to information relating to one or several cells served by an eNB, information relating to cells neighbouring the served cell or cells may also be exchanged. A first eNB may thus get information about cells served by a second eNB. From the first eNB's point of view, this information is regarded as external cell information. The external cell information may concern the cells served by the second eNB as well as cells neighbouring those cells. External cell information from the second eNB is e.g. received by the first eNB at setup of the X2 interface between the first and the second eNB. The external cell information then stored in the first eNB, since it may become useful later on.

EP 2405682 A2 describes a cell identifier deciding method.

WO 2011/162654 A1 describes a method for handling handover.

### SUMMARY

The invention is defined by the appended claims. The subject matter disclosed herein going beyond the scope of the claims should be considered as examples and not embodiments even if words like "embodiment" or "invention" are used in connection thereto.

It is an object of embodiments herein to enhance the performance in a wireless communications network in which radio network nodes exchange information relating to cells served by the radio network nodes.

According to a first aspect of embodiments herein, the object is achieved by a method in a first radio network node, for updating external cell information. The external cell information relates to a first cell served by a second radio network node. The first radio network node determines that there is a need to update the external cell information. The first radio network node sends a first message to the second radio network node. The first message comprises a request for data representing information relating to the first cell. The first radio network node receives, from the second radio network node, a second message. The second message comprises the requested data. The first radio network node updates the external cell information based on the received data

According to a second aspect of embodiments herein, the object is achieved by a method in a second radio network node, for updating external cell information in a first radio network node. The external cell information relates to a first cell served by the second radio network node. The second radio network node receives a first message from the first radio network node. The first message comprises a request for data representing information relating to the first cell. The second radio network node sends a second message to the first radio network node. The second message comprises the requested data, and is sent for enabling the first radio network node to update the external cell information based on the data.

According to a third aspect of embodiments herein, the object is achieved by a first radio network node, for updating external cell information. The, which external cell information relates to a first cell served by a second radio network node. The first radio network node is configured to determine that there is a need to update the external cell information. The first radio network node is further configured to send a first message to the second radio network node. The first message comprises a request for data representing information relating to the first cell. The first radio network node is further configured to receive a second message from the second radio network node. The second message comprises the requested data. The first radio network node is further configured to update the external cell information based on the received data.

According to a fourth aspect of embodiments herein, the object is achieved by a second radio network node, for updating external cell information in a first radio network node. The external cell information relates to a first cell served by the second radio network node. The second radio network node is configured to receive a first message from the first radio network node. The first message comprises a request for data representing information relating to the first cell. The second radio network node is further configured to send a second message to the first radio network node. The second message comprises the requested data, for enabling the first radio network node to update the external cell information based on the data.

An advantage with embodiments herein is that since the first radio network node is able to determine that it needs external cell information from a second radio network node, and since it is able to request this information when needed, the need to store external cell information, sent to the first radio network node from the second radio network node, without the first radio network node asking for it, is reduced. The solution may be regarded as a pull mechanism, enabling the first radio network node to pull relevant information from the second radio network node when needed.

### BRIEF DESCRIPTION OF THE DRAWINGS

Examples of embodiments herein are described in more detail with reference to attached drawings in which:
Figure 1 schematically illustrates a wireless communications network.
Figure 2 schematically illustrates a management system of a wireless communications network.
Figure 3 schematically illustrates embodiments of a wireless communications network.
Figure 4 is a flowchart depicting embodiments of a method in a first radio network node.
Figure 5 is a combined signalling diagram and flowchart illustrating embodiments in a wireless communications network.
Figure 6 is a flowchart depicting embodiments of a method in a second radio network node.
Figure 7 is a schematic block diagram illustrating embodiments of a first radio network node.
Figure 8 is a schematic block diagram illustrating embodiments of a second radio network node.

### DETAILED DESCRIPTION

As part of developing embodiments herein, some problems will first be identified and discussed.

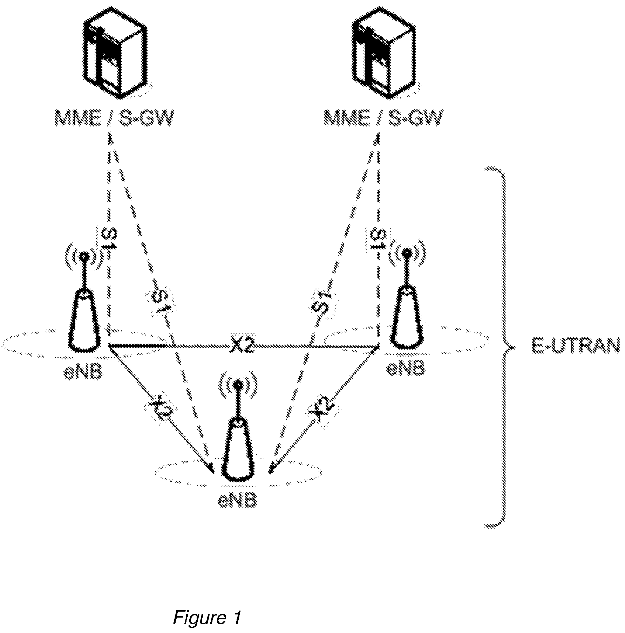

An Evolved packet system (EPS) in which embodiments herein may be implemented is shown in **Figure 1****.** The EPS comprises a RAN implemented as an Evolved Universal Terrestrial RAN (E-UTRAN) and the Evolved packet core (EPC). The E-UTRAN comprises radio access nodes, eNBs, also referred to as radio network nodes. A Mobility Management Entity (MME) is a control plane node of the EPC. A Serving Gateway (S-GW) is a user plane node of the EPC. The interface between eNBs is referred to as X2, and the interface between eNB and MME/S-GW is denoted S1. The signaling transport over X2 and S1 may be implemented via Stream Control Transmission Protocol (SCTP).

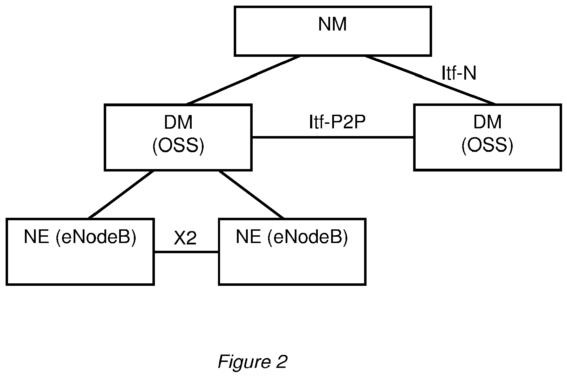

A management system that may be employed in embodiments herein is shown in **Figure 2****.** Network elements (NE), also referred to as radio access nodes, radio network nodes or eNodeBs, are managed by a domain manager (DM), also referred to as the operation and support system (OSS). A DM may further be managed by a network manager (NM). Two NEs are interfaced by X2, whereas the interface between two DMs is referred to as Itf-P2P. The management system may configure the network elements, as well as receive observations associated to features in the network elements. For example, the DM observes and configures NEs, while the NM observes and configures DMs, as well as NEs via DM.

Radio network nodes, such as eNBs exchange information between one another, such as served cell information. An initiating eNB may initiate the procedure by sending an X2 SETUP REQUEST message to a candidate eNB. The candidate eNB replies with the X2 SETUP RESPONSE message. The initiating eNB then transfers the complete list of its served cells and, if available, a list of supported Globally Unique (GU) Group Ids to the candidate eNB2. The candidate eNB replies with the complete list of its served cells and includes, if available, a list of supported GU Group Ids in the reply.

The initiating eNB may include a Neighbour Information IE in the X2 SETUP REQUEST message. The candidate eNB may also include the Neighbour Information IE in the X2 SETUP RESPONSE message. The Neighbour Information IE comprises E-UTRAN cells that are direct neighbours of cells in the reporting eNB.

If served cells or neighbour cells are changed, the information is updated accordingly in an ENB CONFIGURATION UPDATE message.

An initiating eNB may initiate the procedure by sending an ENB CONFIGURATION UPDATE message to a peer eNB . Such message comprises an appropriate set of up-to-date configuration data, including, but not limited to, the complete lists of added, modified and deleted served cells in the initiating eNB.

The information about the served cells that are sent over the X2 interface between the two eNBs is normally stored in the receiving eNB, where information about each external cell, i.e. a cell served by a peer eNB, is stored individually. Information on some of the external cells are used by the node for mobility, load management, inter-cell interference co-ordination (ICIC) or by other features, but information for some external cells is not. The trend is to have more and more cells per node, hence in that way increasing the data from other nodes that the node needs to modulate and store, even though only a fraction of the information will be used. Also, in those X2 messages, information about neighbours to the served cells is sent and not only information on served cells. The information about these neighbour cells is also used to a limited extent and some information is never used.

The problem is that a large amount of information is received at the same time, only a fraction will be needed and it cannot be decided upon reception of the information, what part will later be needed. All of the information must be stored by the receiving node, which wastes capacity in the node.

Furthermore, the information on external cells and their neighbour relations is normally mirrored into an Operations and Maintenance (O&M) system and unnecessarily consumes capacity also there.

In LTE, the neighbour information that is not stored can today be retrieved from the neighbour eNB only by triggering a new X2 Setup. The problem with this solution is that all procedures that are ongoing over this X2 interface will be aborted and also that a lot of information, that is of no use, is again transferred, as all served cells with neighbour cell information is included.

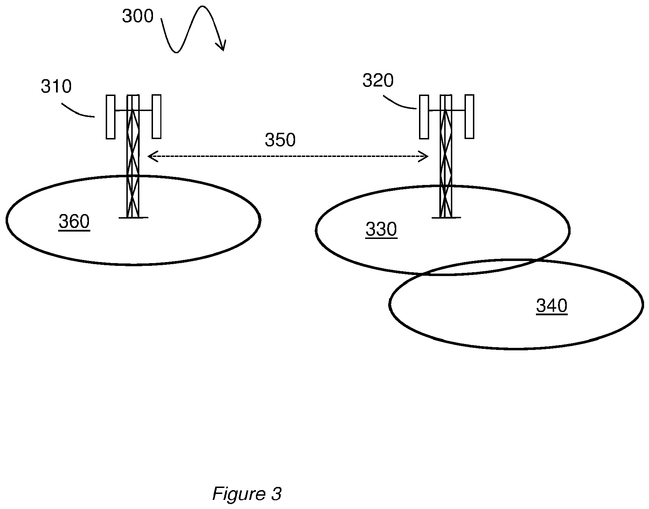

**Figure 3** depicts an example of a **wireless communications network 300** in which embodiments herein may be implemented. The wireless communications network 300 may be referred to as a wireless or a cellular network e.g. based on any of 3rd Generation, Universal Mobile Telecommunications System (UMTS), Wideband Code Division Multiple Access (WCDMA), High Speed Packet Access (HSPA) and 4th Generation (4G), Evolved Packet System (EPS), Long Term Evolution (LTE), Long Term Evolution Advanced (LTE-A), or may be referred to as a wireless communication network such as an LTE, WCDMA, Global System for Mobile Communications (GSM) network, any 3GPP cellular network, Worldwide Interoperability for Microwave Access (Wimax), or any cellular network or system.

The wireless communications network 300 comprises a plurality of network nodes whereof two are depicted in Figure 3. One of those is a **first radio network node 310.** The first network radio node 310 may be a transmission point such as a radio base station, for example an eNB, an eNodeB, or an Home Node B, an Home eNode B or any other network node capable to serve a wireless device such as a user equipment or a machine type communication device in a wireless communications network. The first radio network node may also act as a master node to one or more secondary network nodes, where a secondary node also serves a wireless device.

The other network node depicted in Figure 3 is a second radio network node 320. Like the first radio network node, the second radio network node 320 may be a transmission point such as a radio base station, for example an eNB, an eNodeB, or an Home Node B, an Home eNode B or any other network node capable to serve a wireless device such as a user equipment or a machine type communication device in a wireless communications network. The second radio network node may also act as a master node to one or more secondary network nodes, where a secondary node also serves a wireless device.

The second radio network node 320 serves a **first cell 330.** The second radio network node 320 thus provides radio coverage to the first cell 330. In Figure 3, one first cell 330 is depicted. However, there may be a plurality of cells, served by the second radio network node 320.

A **second cell 340** neighbours the first cell 330. The second cell 340 may be served by a third radio network node (not shown).

An **interface 350** interconnects the first radio network node 310 and the second radio network node 320. The interface 350 may be an X2 interface.

The first radio network node 310 serves a **third cell 360.** The first radio network node 310 thus provides radio coverage to the third cell 360. In Figure 3, one third cell 360 is depicted. However, there may be a plurality of cells, served by the first radio network node 310.

The first radio network node may e.g. receive external cell information when the interface between the first radio network node and the second radio network node is setup, e.g. in an X2 SETUP MESSAGE. This information may thus be regarded as "pushed" to the first radio network node. When the first radio network node receives this information, it does not know if the information will be needed later on, or if it will not be needed at all. In current solutions, all of the received external cell information has to be stored in the first radio network node, since it may be needed later on. However, most of the information may not be needed. Storage of the not needed information wastes capacity in the first radio network node and thus reduces the performance of the wireless communications network.

Since embodiments herein provide a possibility to request external cell information when needed, some of the information which is "pushed" to the first radio network node when the first radio network node has not explicitly asked for it may be discarded. Capacity usage of the first radio network node is then improved, and thereby also the performance of the wireless communications network.

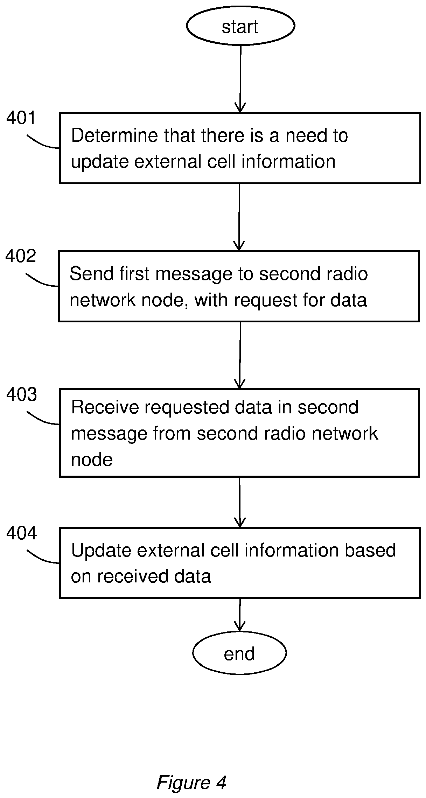

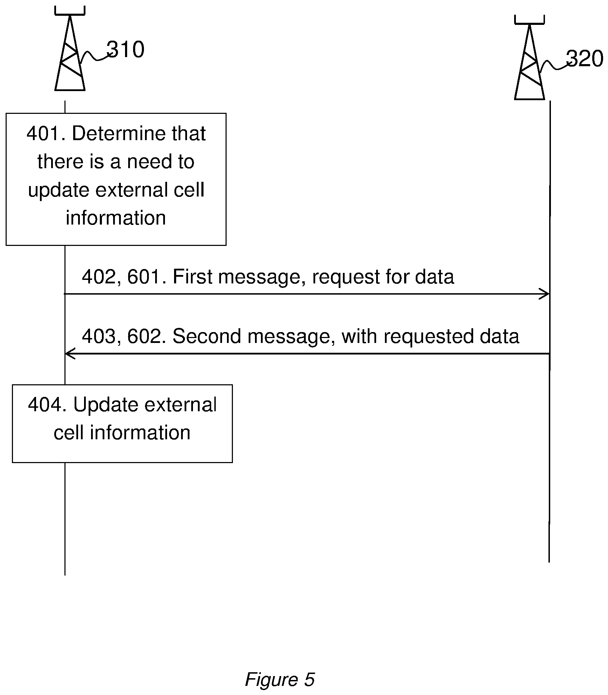

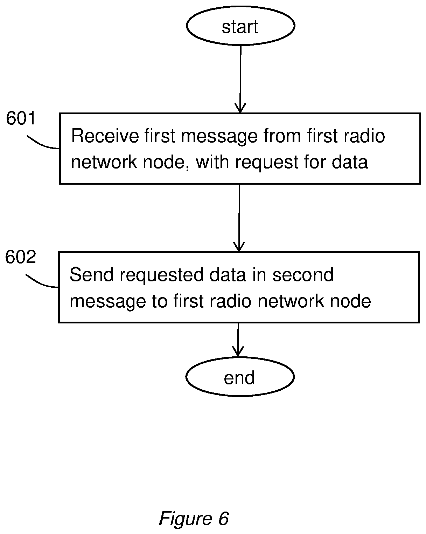

Example embodiments of a method in the first radio network node 310, for updating external cell information, will now be described with reference to a flowchart depicted in **Figure 4****.** The method comprises the following actions, which actions may be taken in any suitable order. First, the method is described in a general way, here as seen from the first radio network node's 310 point of view, relating to Figure 4 and Figure 5. Then, the method will be described as seen from the second radio network node's 320 point of view, relating to Figure 5 and Figure 6. **Figure 5** is a combined flow chart and signaling diagram, giving an overview of embodiments of a method according to embodiments herein. The method will then be described in more detail below.

Embodiments herein address scenarios in which the first radio network node 310 is connected to the second radio network node by means of the interface 350.

### Action 401

The first radio network node 310 determines that there is a need to update the external cell information. The external cell information relates to a first cell 330, served by the second radio network node 320.

In some embodiments, the determining is based on a detection of at least one of a Physical Cell Identity (PCI) collision and a PCI confusion. A PCI algorithm may then have to be performed in the first radio network node 310, in order to reallocate a new PCI to the third cell 360. The first network node 310 then needs external cell information relating to the first cell 330 and to a second cell 340, neighboring the first cell 330.

In some embodiments, the determining is based on an addition of a relation between a third cell 360, served by the first radio network node 310, and the first cell 330. The first network node 310 may then need external cell information, which external cell information relates to the first cell 330.

### Action 402

The first radio network node 310 sends, to the second radio network node 320, a first message which first message comprises a request for data representing information relating to the first cell 330. The first radio network node thus triggers the second radio network node to send the requested data. The first message may be represented by an ENB CONFIGURATION REQUEST message, which is described in more detail below. Alternatively, the first message may be represented by an ENB CONFIGURATION UPDATE REQUEST message, which is described in more detail below.

In some embodiments the request for data relating to the first cell 330 comprises an indication of a kind of information requested. The kind of information is then at least one of information relating to the first cell 330 and information relating to at least one second cell 340 neighbouring the first cell. The indication may be represented by a *Cell Information Requested Information Element (IE).* Information relating to the first cell 330 may be represented by a *Served Cell information IE.* Information relating to the second cell 340, neighbouring the first cell 330, may be represented by a *Neighbour Information IE.*

### Action 403

The first radio network node 310 receives, from the second radio network node 320, a second message, which second message comprises the requested data.

In embodiments in which the first message is represented by an ENB CONFIGURATION REQUEST message, the second message may be represented by an ENB CONFIGURATION RESPONSE message, which is described in more detail below. In embodiments in which the first message is represented by an ENB CONFIGURATION UPDATE REQUEST message, the second message may be represented by an ENB CONFIGURATION UPDATE message. In those embodiments, a previously known message is thus reused for sending the external cell information to the first radio network node 310. The ENB CONFIGURATION UPDATE message is further described below.

### Action 404

Now that the first radio network node 310 has received the data it requested, the first radio network node 310 updates the external cell information based on the received data.

In embodiments in which the need to update the external cell information is due to a PCI confusion and/or a PCI collision, the first radio network node may perform the PCI reallocation mechanism when it has received the data. The data may in those embodiments relate to information regarding the first cell 330 and information regarding a second cell 340.

A method will now be described from a perspective of the second radio network node 320. Thus, embodiments of a method in a second radio network node 320, for updating external cell information in a first radio network node 310 will be described with reference to a flowchart depicted in **Figure 6****,** and to the combined flow chart and signaling diagram depicted in Figure 5. The external cell information relates to a first cell 330, served by the second radio network node 320.The method comprises the following actions, which actions may be taken in any suitable order.

### Action 601

The second radio network node 320 receives a first message from the first radio network node 310. The first message comprises a request for data representing information relating to the first cell 330.

In some embodiments the request for data relating to the first cell 330 comprises an indication of a kind of information requested. The kind of information is then at least one of information relating to the first cell 330 and information relating to at least one second cell 340 neighbouring the first cell. The indication may be represented by a *Cell Information Requested Information Element (IE).* Information relating to the first cell 330 may be represented by a *Served Cell information IE.* Information relating to the second cell 340, neighbouring the first cell 330, may be represented by a *Neighbour Information IE.*

### Action 602

The second radio network node 320 sends a second message to the first radio network node 310. The second message comprises the requested data, for enabling the first radio network node 310 to update the external cell information based on the data.

Exemplary embodiments of methods described in a general way above will now be described in more detail. The description below may refer to any embodiment above.

When the first radio network node 310 detects that it needs external cell information from the second radio network node 320, it may trigger the second radio network node 320 to send the needed information. The external cell information may be information that was discarded by the first radio network node 310 when it first received it, e.g. in an X2 setup procedure. The detection relates to action 401 described above.

To receive the external cell information, the first radio network node 310 needs to trigger the second radio network node to send the needed information.

The first message might be formulated to cover the need for information, such as a Cell Global Identifier (CGI) relating to specified cells or all cells served by the second radio network node 320.

This may be achieved with a new procedure in which an ENB CONFIGURATION REQUEST message is sent as a first message to the second radio network node. This relates to actions 402 and 601 described above. The first message might be formulated to cover the need for information, such as a Cell Global Identifier (CGI) relating to specified cells or all cells served by the second radio network node 320. The first cell 330 may accordingly be one or several cells, as indicated in the first message.

Table 1 depicts a possible format of an ENB CONFIGURATION REQUEST message.

**Table 1. Possible format of a new ENB CONFIGURATION REQUEST message**

| **IE/Group Name** | **Presence** | **Range** | **IE type and reference** | **Semantics description** |
|---|---|---|---|---|
| Message Type | M | | 9.2.13 | |
| **Requsted Cells to Update** | | 0.. <*maxCelli neNB*> | | List of cells for which information is requested |
| >ECGI | M | | ECGI 9.2.14 | E-UTRAN Cell Global Identifier of the cell |
| >Cell Information Requested | M | | BIT STRING | |

Alternatively, the first message may be an ENB CONFIGURATION UPDATE REQUEST message, which is used to trigger the existing function for ENB Configuration Update. Sending of the ENB CONFIGURATION UPDATE REQUEST message also relates to actions 402 and 601 described above. The first message might be formulated to cover the need for information, such as a Cell Global Identifier (CGI) relating to specified cells or all cells served by the second radio network node 320. The first cell 330 may accordingly be one or several cells, as indicated in the first message.

Table 2 depicts a possible format of an ENB CONFURATION REQUEST message.

**Table 2. Possible format of a new ENB CONFIGURATION UPDATE REQUEST message.**

| **IE/Group Name** | **Presence** | **Range** | **IE type and reference** | **Semantics description** |
|---|---|---|---|---|
| Message Type | M | | 9.2.13 | |
| **Requested Cells to Update** | | 0.. <*maxCelline NB*> | | List of cells for which information is requested |
| >ECGI | M | | ECGI 9.2.14 | E-UTRAN Cell Global Identifier of the cell |
| >Cell Information Requested | M | | BIT STRING | |

In embodiments in which the first radio network node triggers a new procedure by means of sending the ENB CONFIGURATION REQUEST message as a first message to the second radio network node, the second radio network node may responds by means of sending a second message represented by an ENB CONFIGURATION RESPONSE message . This relates to actions 403 and 602 described above. Table 3 depicts a possible format of an ENB CONFIGURATION RESPONSE message.

**Table 3. Possible format of a new ENB CONFIGURATION RESPONSE message**

| **IE/Group Name** | **Presence** | **Range** | **IE type and reference** | **Semantics description** |
|---|---|---|---|---|
| Message Type | M | | 9.2.13 | |
| **Served Cells To Update** | | 0.. <*maxCelline NB*> | | List of cells served by the eNB, for which information is updated |
| >Served Cell Information | M | | 9.2.8 | |
| **>Neighbour Information** | | 0 .. *<maxnoofNei ghbours>* | | |
| >>ECGI | M | | ECGI 9.2.14 | E-UTRAN Cell Global Identifier of the neighbour cell |
| >>PCI | M | | INTEGER (0..503, ...) | Physical Cell Identifier of the neighbour cell |
| >>EARFCN | M | | 9.2.26 | DL EARFCN for FDD or EARFCN for TDD |
| >>TAC | O | | OCTET STRING (2) | Tracking Area Code |
| >Deactivation Indication | O | | ENUMER ATED(dea ctivated, ...) | Indicates that the concerned cell is switched off for energy saving reasons |

In embodiments in which the first radio network node triggers an existing procedure by means of sending the ENB CONFIGURATION UPDATE REQUEST message as a first message to the second radio network node, the second radio network node may responds by means of sending a second message represented by an ENB CONFIGURATION UPDATE message . This relates to actions 403 and 602 described above. The ENB CONFIGURATION UPDATE message is an already known message, used in existing configuration update procedures. Table 4 depicts a possible new format of an ENB CONFIGURATION UPDATE message, in which some IEs have been added as compared to the ENB CONFIGURATION UPDATE message in 3GPP TS 36.423, Release 12.

**Table 4. Possible new format of an ENB CONFIGURATION UPDATE message**

| **IE/Group Name** | **Presence** | **Range** | **IE type and reference** | **Semantics description** | |
|---|---|---|---|---|---|
| Message Type | M | | 9.2.13 | | |
| **Served Cells To Add** | | 0.. <*maxCellin eNB*> | | Complete list of added cells served by the eNB | |
| >Served Cell Information | M | | 9.2.8 | | |
| **>Neighbour Information** | | 0 .. *<maxnoofN eighbours*> | | | |
| >>ECGI | M | | ECGI 9.2.14 | E-UTRAN Cell Global Identifier of the neighbour cell | |
| >>PCI | M | | INTEGER (0..503, ...) | Physical Cell Identifier of the neighbour cell | |
| >>EARFCN | M | | 9.2.26 | DL EARFCN for FDD or EARFCN for TDD | |
| >>TAC | O | | OCTET STRING (2) | Tracking Area Code | |
| **Served Cells To Modify** | | 0.. <*maxCellin eNB*> | | Complete list of modified cells served by the eNB | |
| >Old ECGI | M | | ECGI 9.2.14 | Old E-UTRAN Cell Global Identifier | |
| >Served Cell Information | M | | 9.2.8 | | |
| **>Neighbour Information** | | 0 .. *<maxnoofN eighbours*> | | | |
| >>ECGI | M | | ECGI 9.2.14 | E-UTRAN Cell Global Identifier of the neighbour cell | |
| >>PCI | M | | INTEGER (0..503,...) | Physical Cell Identifier of the neighbour cell | |
| >>EARFCN | M | | 9.2.26 | DL EARFCN for FDD or EARFCN for TDD | |
| >>TAC | O | | OCTET STRING (2) | Tracking Area Code | |
| > Deactivation Indication | O | | ENUMER ATED(dea ctivated, ...) | Indicates that the concerned cell is switched off for energy saving reasons | |
| **Served Cells To Update** | | 0.. <*maxCellin eNB*> | | Complete list of modified cells served by the eNB | New IE |
| >Served Cell Information | M | | 9.2.8 | | New IE |
| **>Neighbour Information** | | *0* .. <*maxnoofN eighbours*> | | | New IE |
| >>ECGI | M | | ECGI 9.2.14 | E-UTRAN Cell Global Identifier of the neighbour cell | New IE |
| >>PCI | M | | INTEGER (0..503, ...) | Physical Cell Identifier of the neighbour cell | New IE |
| >>EARFCN | M | | 9.2.26 | DL EARFCN for FDD or EARFCN for TDD | New IE |
| >>TAC | O | | OCTET STRING (2) | Tracking Area Code | New IE |
| >Deactivation Indication | O | | ENUMER ATED(dea ctivated, ...) | Indicates that the concerned cell is switched off for energy saving reasons | New IE |
| **Served Cells To Delete** | | 0.. <*maxCellin eNB*> | | Complete list of deleted cells served by the eNB | |
| >Old ECGI | M | | ECGI 9.2.14 | Old E-UTRAN Cell Global Identifier of the cell to be deleted | |
| **GU Group Id To Add List** | | 0 .. *<maxPools* > | | | |
| >GU Group Id | M | | 9.2.20 | | |
| **GU Group Id To Delete List** | | 0 .. *<maxPools* > | | | |
| >GU Group Id | M | | 9.2.20 | | |

Table 5 depicts a possible format of a Cell Information Requested IE, which may be comprised in the first message, such as the ENB CONFIGURATION REQUEST message or the ENB CONFIGURATION UPDATE REQUEST message.

**Table 5. Possible format of a Cell Information Requested information element**

| **IE/Group Name** | **Presence** | **IE type and reference** | **Semantics description** |
|---|---|---|---|
| Cell Information Requested | M | BIT STRING () | Each position in the bitmap represents a set of information: first bit =Served Cell Information, second bit =Neighbour Information, .... Value '1' indicates 'information requested'. Value '0' indicates 'information not requested'. |

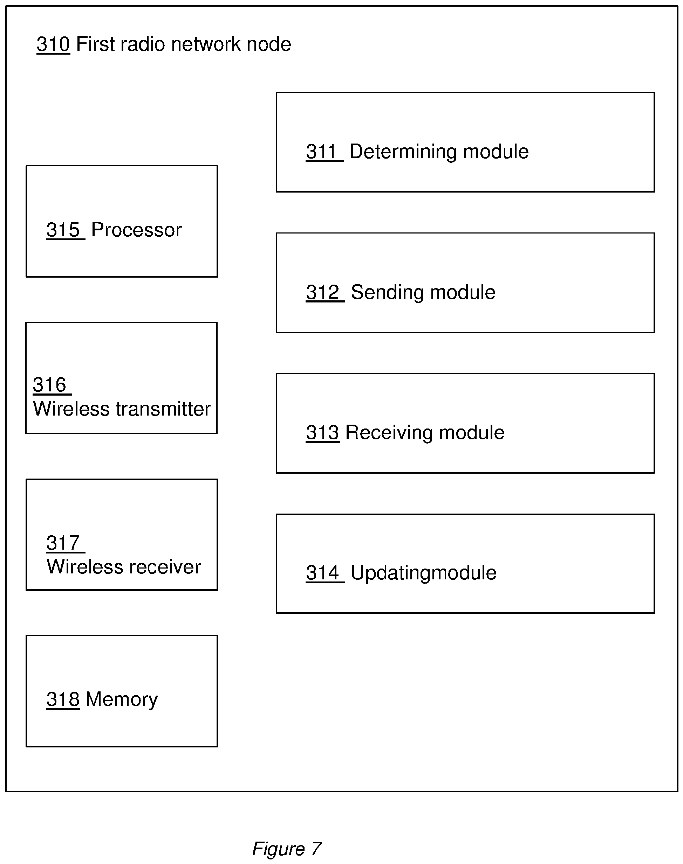

The first radio network node 310 configured to perform the method actions for updating external cell information relating to a first cell 330 served by a second radio network node 320, as described above in relation to Figure 4, is depicted in **Figure 7****.**

The first radio network node 310 is configured to determine that there is a need to update the external cell information, e.g. by means of a **determining module 311.** The determining module 311 may be a **processor 315** of the first radio network node 310. In some embodiments the first radio network node 310 is configured to determine that there is a need to update the external cell information, based on a detection of at least one of a Physical Cell Identity, PCI, collision and a PCI confusion. In some embodiments the first radio network node 310 is configured to determine that there is a need to update the external cell information, based on an addition of a relation between a third cell 360 and the first cell 330. The third cell 360 is served by the first radio network node 310.

The first radio network node 310 is further configured to send, e.g. by means of a **sending module 312,** a first message to the second radio network node 320, which first message comprises a request for data representing information relating to the first cell 330. The sending module 312 may be a **wireless transmitter 316** of the first radio network node 310. In some embodiments, the request for data relating to the first cell 330 comprises an indication of a kind of information requested. The kind of information is then at least one of information relating to the first cell 330 and information relating to at least one second cell 340 neighbouring the first cell.

The first radio network node 310 is further configured to receive, e.g. by means of a **receiving module 313,** a second message, from the second radio network node 320, which second message comprises the requested data. The receiving module 313 may be a **wireless receiver 317** of the first radio network node 310.

The first radio network node 310 is further configured to update, e.g. by means of an **updating module 314,** the external cell information based on the received data. The updating module 314 may be a **processor 315** of the first radio network node 310.

The embodiments herein for updating external cell information may be implemented through one or more processors, such as a **processor 315** in the first radio network node 310 depicted in Figure 7, together with computer program code for performing the functions and actions of the embodiments herein. The program code mentioned above may also be provided as a computer program product, for instance in the form of a data carrier carrying computer program code for performing the embodiments herein when being loaded into the in the first radio network node 310. One such carrier may be in the form of a CD ROM disc. It is however feasible with other data carriers such as a memory stick. The computer program code may furthermore be provided as pure program code on a server and downloaded to the first radio network node 310.

The first radio network node 310 may further comprise a **memory 318** comprising one or more memory units. The memory 318 is arranged to be used to store indications, metrics, determined measures of the downlink interference, cell parameters, configurations, and applications to perform the methods herein when being executed in the first radio network node 310.

Those skilled in the art will also appreciate that the determining module 311, sending module 312, receiving module 313, updating module 314, wireless transmitter 316, and wireless receiver 317 described above may refer to a combination of analog and digital circuits, and/or one or more processors configured with software and/or firmware, e.g. stored in a memory, that when executed by the one or more processors such as the processor 315 as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

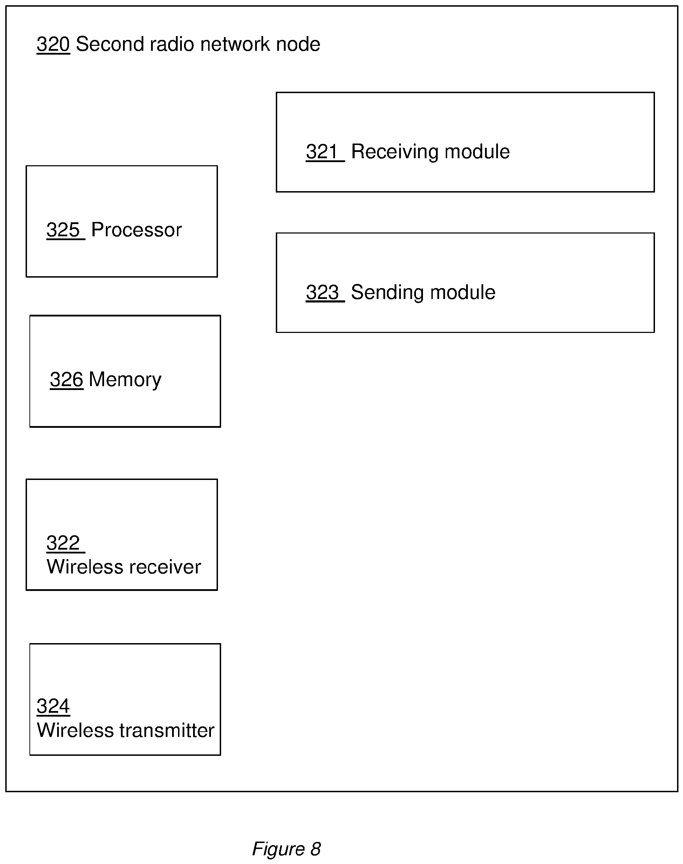

The second radio network node 320 configured to perform the actions for updating external cell information in a first radio network node 310 as described above in relation to Figure 6, is depicted in **Figure 8****.** The external cell information relates to a first cell 330 served by the second radio network node 320. The second radio network node is configured to receive, from the first radio network node 310, a first message, e.g. by means of a **receiving module 321.** The receiving module 321 may be a **wireless receiver 322** of the second radio network node 320. The first message comprises a request for data representing information relating to the first cell 330. In some embodiments, the request for data relating to the first cell 330 comprises an indication of a kind of information requested. The kind of information is then at least one of information relating to the first cell 330 and information relating to at least one second cell 340 neighbouring the first cell 330.

The second radio network node 320 is further configured to send, e.g. by means of a sending module 323, a second message to the first radio network node 310, which second message comprises the requested data, for enabling the first radio network node 310 to update the external cell information based on the data. The sending module 323 may be a wireless transmitter 324 of the second radio network node 320.

The embodiments herein for updating external cell information may be implemented through one or more processors, such as a processor 325 in the second radio network node 320 depicted in Figure 8, together with computer program code for performing the functions and actions of the embodiments herein. The program code mentioned above may also be provided as a computer program product, for instance in the form of a data carrier carrying computer program code for performing the embodiments herein when being loaded into the in the second radio network node 320. One such carrier may be in the form of a CD ROM disc. It is however feasible with other data carriers such as a memory stick. The computer program code may furthermore be provided as pure program code on a server and downloaded to the second radio network node 320.

The second second radio network node 320 may further comprise a memory 326 comprising one or more memory units. The memory 326 is arranged to be used to store indications, metrics, determined measures of the downlink interference, cell parameters, configurations, and applications to perform the methods herein when being executed in the second radio network node 320.

Those skilled in the art will also appreciate that the receiving module 321, sending module 323, wireless receiver 322, and wireless transmitter 324 described above may refer to a combination of analog and digital circuits, and/or one or more processors configured with software and/or firmware, e.g. stored in a memory, that when executed by the one or more processors such as the processor 325 as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

When using the word "comprise" or "comprising" it shall be interpreted as nonlimiting, i.e. meaning "consist at least of".

The embodiments herein are not limited to the above described preferred embodiments. Various alternatives and modifications may be used. Therefore, the above embodiments should not be taken as limiting the scope of the invention, which is defined by the appending claims.

## Claims

1. A method in a **first radio network node** (310), for updating external cell information, which external cell information relates to a **first cell** (330) served by a **second radio network node** (320), the method comprising:
*receiving* external cell information from the second radio network node;
*discarding* some of the received external cell information from storing;
*determining* (401) that there is a need to update the external cell information, wherein the need relates to the discarded external cell information;
*sending* (402), to the second radio network node (320) in response to the determined need, a first message which first message comprises a request for data representing information relating to the first cell (330), wherein the request comprises an indication of a kind of information requested, the kind of information being at least one of information relating to the first cell (330), and information relating to at least one second cell (340) neighbouring the first cell;
*receiving* (403), from the second radio network node (320), a second message, which second message comprises the requested data; and
*updating* (404) the external cell information based on the received data.

2. The method according to claim 1, wherein the determining is based on a detection of at least one of a Physical Cell Identity, PCI, collision and a PCI confusion.

3. The method according to any of claims 1 to 2, wherein the determining is based on an addition of a relation between a third cell (360) and the first cell (330), wherein the third cell (360) is served by the first radio network node (310).

4. A **first radio network node** (310), for updating external cell information, which external cell information relates to a **first cell** (330) served by a **second radio network node** (320), the first radio network node (310) being configured to:
receive external cell information from the second radio network node;
discard some of the received external cell information from storing;
determine that there is a need to update the external cell information, wherein the need relates to the discarded external cell information;
send, to the second radio network node (320) in response to the determined need, a first message which first message comprises a request for data representing information relating to the first cell (330), wherein the request comprises an indication of a kind of information requested, the kind of information being at least one of information relating to the first cell (330), and information relating to at least one second cell (340) neighbouring the first cell;
receive, from the second radio network node (320), a second message, which second message comprises the requested data; and
update the external cell information based on the received data.

5. The first radio network node (310) according to claim 4, wherein the first radio network node (310) is configured to determine that there is a need to update the external cell information, based on a detection of at least one of a Physical Cell Identity, PCI, collision and a PCI confusion.

6. The first radio network node (310) according to any of claims 4 to 5, wherein the first radio network node (310) is configured to determine that there is a need to update the external cell information, based on an addition of a relation between a third cell (360) and the first cell (330), wherein the third cell (360) is served by the first radio network node (310).

## Patentansprüche

1. Verfahren in einem **ersten Funknetzknoten** (310) zum Aktualisieren von externen Zellinformationen, wobei sich die externen Zellinformationen auf eine **erste Zelle** (330) beziehen, die von einem **zweiten Funknetzknoten** (320) bedient wird, wobei das Verfahren umfasst:
*Empfangen* externer Zellinformationen von dem zweiten Funknetzknoten;
*Verwerfen* einiger der empfangenen externen Zellinformationen aus der Speicherung;
*Bestimmen* (401), dass ein Bedarf besteht, die externen Zellinformationen zu aktualisieren, wobei sich der Bedarf auf die verworfenen externen Zellinformationen bezieht;
*Senden* (402) einer ersten Nachricht an den zweiten Funknetzknoten (320) als Reaktion auf den bestimmten Bedarf, wobei die erste Nachricht eine Anforderung von Daten umfasst, die Informationen in Bezug auf die erste Zelle (330) darstellen, wobei die Anforderung eine Angabe einer Art der angeforderten Informationen umfasst, wobei die Art der Informationen mindestens eine Information in Bezug auf die erste Zelle (330) und Informationen in Bezug auf mindestens eine zweite Zelle (340) ist, die zu der ersten Zelle benachbart ist;
*Empfangen* (403) einer zweiten Nachricht von dem zweiten Funknetzknoten (320), wobei die zweite Nachricht die angeforderten Daten umfasst; und
*Aktualisieren* (404) der externen Zellinformationen basierend auf den empfangenen Daten.

2. Verfahren nach Anspruch 1, wobei das Bestimmen auf einem Erkennen mindestens einer von einer Kollision einer physischen Zellidentität, PCI-Kollision und einer PCI-Verwechslung basiert.

3. Verfahren nach einem der Ansprüche 1 bis 2, wobei das Bestimmen auf einem Hinzufügen einer Beziehung zwischen einer dritten Zelle (360) und der ersten Zelle (330) basiert, wobei die dritte Zelle (360) durch den ersten Funknetzknoten (310) bedient wird.

4. **Erster Funknetzknoten** (310) zum Aktualisieren von externen Zellinformationen, wobei die externen Zellinformationen sich auf eine **erste Zelle** (330) beziehen, die von einem **zweiten Funknetzknoten** (320) bedient wird, wobei der erste Funknetzknoten (310) konfiguriert ist zum:
Empfangen externer Zellinformationen von dem zweiten Funknetzknoten;
Verwerfen einiger der empfangenen externen Zellinformationen aus der Speicherung;
Bestimmen, dass ein Bedarf besteht, die externe Zellinformationen zu aktualisieren, wobei sich der Bedarf auf die verworfenen externen Zellinformationen bezieht;
Senden einer ersten Nachricht an den zweiten Funknetzknoten (320) als Reaktion auf den bestimmten Bedarf, wobei die erste Nachricht eine Anforderung von Daten umfasst, die Informationen in Bezug auf die erste Zelle (330) darstellen, wobei die Anforderung eine Angabe einer Art der angeforderten Informationen umfasst, wobei die Art der Informationen mindestens eine Information in Bezug auf die erste Zelle (330) und Informationen in Bezug auf mindestens eine zweite Zelle (340) ist, die zu der ersten Zelle benachbart ist;
Empfangen einer zweiten Nachricht von dem zweiten Funknetzknoten (320), wobei die zweite Nachricht die angeforderten Daten umfasst; und
Aktualisieren der externen Zellinformationen basierend auf den empfangenen Daten.

5. Erster Funknetzknoten (310) nach Anspruch 4, wobei der erste Funknetzknoten (310) konfiguriert ist, um basierend auf einem Erkennen mindestens einer von einer Kollision einer physischen Zellidentität, PCI-Kollision und einer PCI-Verwechslung zu bestimmen, dass ein Bedarf besteht, die externen Zellinformationen zu aktualisieren.

6. Erster Funknetzknoten (310) nach einem der Ansprüche 4 bis 5, wobei der erste Funknetzknoten (310) konfiguriert ist, um basierend auf einem Hinzufügen einer Beziehung zwischen einer dritten Zelle (360) und der ersten Zelle (330), wobei die dritte Zelle (360) durch den ersten Funknetzknoten (310) bedient wird, zu bestimmen, dass ein Bedarf besteht, die externen Zellinformationen zu aktualisieren.

## Revendications

1. Procédé dans un **premier nœud de réseau radio** (310), pour mettre à jour des informations de cellule externe, lesquelles informations de cellule externe se rapportent à une **première cellule** (330) desservie par un **deuxième nœud de réseau radio** (320), le procédé comprenant :
la *réception* d'informations de cellule externe depuis le deuxième nœud de réseau radio ;
la *mise à l'écart* d'un stockage, de certaines des informations de cellule externe reçues ;
le *fait de déterminer* (401) qu'il y a un besoin pour mettre à jour les informations de cellule externe, dans lequel le besoin se rapporte aux informations de cellule externe mises à l'écart ;
l'envoi (402), au deuxième nœud de réseau radio (320) en réponse au besoin déterminé, d'un premier message lequel premier message comprend une demande de données représentant des informations se rapportant à la première cellule (330),
dans lequel la demande comprend une indication d'un type d'informations demandé, le type d'informations étant au moins l'une parmi des informations se rapportant à la première cellule (330), et des informations se rapportant à au moins une deuxième cellule (340) voisine de la première cellule ;
la *réception* (403), depuis le deuxième nœud de réseau radio (320), d'un deuxième message, lequel deuxième message comprend les données demandées ; et
la *mise à jour* (404) des informations de cellule externe sur la base des données reçues.

2. Procédé selon la revendication 1, dans lequel la détermination est basée sur une détection d'au moins l'une parmi une collision d'identité de cellule physique, PCI, et une confusion de PCI.

3. Procédé selon l'une quelconque des revendications 1 à 2, dans lequel la détermination est basée sur une addition d'une relation entre une troisième cellule (360) et la première cellule (330), dans lequel la troisième cellule (360) est desservie par le premier nœud de réseau radio (310).

4. **Premier noeud de réseau radio** (310), pour mettre à jour des informations de cellule externe, lesquelles informations de cellule externe se rapportent à une **première cellule** (330) desservie par un **deuxième noeud de réseau radio** (320), le premier nœud de réseau radio (310) étant configuré pour :
recevoir des informations de cellule externe depuis le deuxième nœud de réseau radio ;
mettre à l'écart d'un stockage certaines des informations de cellule externe reçues ;
déterminer qu'il y a un besoin pour mettre à jour les informations de cellule externe, dans lequel le besoin se rapporte aux informations de cellule externe mises à l'écart ;
envoyer, au deuxième nœud de réseau radio (320) en réponse au besoin déterminé, un premier message lequel premier message comprend une demande de données représentant des informations se rapportant à la première cellule (330), dans lequel la demande comprend une indication d'un type d'informations demandé, le type d'informations étant au moins l'une parmi des informations se rapportant à la première cellule (330),
et des informations se rapportant à au moins une deuxième cellule (340) voisine de la première cellule ;
recevoir, depuis le deuxième nœud de réseau radio (320), un deuxième message, lequel deuxième message comprend les données demandées ; et
mettre à jour les informations de cellule externe sur la base des données reçues.

5. Premier nœud de réseau radio (310) selon la revendication 4, dans lequel le premier nœud de réseau radio (310) est configuré pour déterminer qu'il y a un besoin pour mettre à jour les informations de cellule externe, sur la base d'une détection d'au moins l'une parmi une collision d'identité de cellule physique, PCI, et une confusion de PCI.

6. Premier nœud de réseau radio (310) selon l'une quelconque des revendications 4 à 5, dans lequel le premier nœud de réseau radio (310) est configuré pour déterminer qu'il y a un besoin pour mettre à jour les informations de cellule externe, sur la base d'une addition d'une relation entre une troisième cellule (360) et la première cellule (330), dans lequel la troisième cellule (360) est desservie par le premier nœud de réseau radio (310).
